# EUROPEAN PATENT SPECIFICATION

(11) **EP 3 275 847 B1**
(45) Date of publication and mention of the grant of the patent: **17.02.2021**
(21) Application number: 15906052.4
(22) Date of filing: 15.10.2015
(51) Int. Cl.: C03C 3/112, C03C 3/087, C03C 13/00, C03C 3/091, C03C 3/118

(54) **HIGH-PERFORMANCE GLASS FIBER COMPOSITION, AND GLASS FIBER AND COMPOSITE MATERIAL THEREOF**
HOCHLEISTUNGSFÄHIGE GLASFASERZUSAMMENSETZUNG UND GLASFASER UND VERBUNDSTOFFMATERIAL DARAUS
COMPOSITION DE FIBRE DE VERRE HAUTE PERFORMANCE, FIBRE DE VERRE ET MATÉRIAU COMPOSITE ASSOCIÉS

(43) Date of publication of application: 31.01.2018
(73) Proprietor: Jushi Group Co., Ltd., Tongxiang, Zhejiang 314500 (CN)
(72) Inventor: ZHANG, Lin, Tongxiang Zhejiang 314500 (CN); CAO, Guorong, Tongxiang Zhejiang 314500 (CN); XING, Wenzhong, Tongxiang Zhejiang 314500 (CN); GU, Guijiang, Tongxiang Zhejiang 314500 (CN)
(74) Representative: Manitz Finsterwald Patent- und Rechtsanwaltspartnerschaft mbB
(86) International application number: PCT/CN2015/091987
(87) International publication number: WO 2017/063167

(56) References cited:
- CN-A- 101 734 862
- CN-A- 102 491 644
- CN-A- 103 781 736
- CN-A- 104 743 888
- US-A1- 2013 203 583

## Description

### FIELD OF THE INVENTION

The invention relates to glass fiber compositions, in particular, to high-performance glass fiber compositions that can be used as a reinforcing base material for composites, and to the glass fiber and composite material therefrom.

### BACKGROUND OF THE INVENTION

Glass fiber is an inorganic fiber material that can be used to reinforce resins to produce composite materials with good performance. As a reinforcing base material for advanced composite materials, high-performance glass fibers were originally used mainly in the national defense industry, such as aeronautic, aerospace and military industry. With the progress of science and technology and the development of economy, high-performance glass fibers have been widely used in civil and industrial fields such as motors, wind blades, pressure vessels, offshore oil pipes, sports apparatus and auto industry. Examples for a composition for a glass fiber can be found in US 2013 0244858 A1 and US 2013 0203583 A1.

Since Owens Corning Company (hereinafter referred to as OC) of the US developed S-2 glass fiber, different countries have competed in developing high-performance glass fibers with various compositions, e.g. R glass fiber developed by Saint-Gobain of France, HiPer-tex glass fiber developed by OC of US and high-strength glass fiber 2# developed by Nanjing Fiberglass Research & Design Institute Co. Ltd of China. The original high-performance glass compositions were based on an MgO-Al₂O₃-SiO₂ system and a typical composition was the S-2 glass developed by OC of US. However, the production of S-2 glass is excessively difficult, as its forming temperature is up to about 1571°C and its liquidus temperature is up to 1470°C and therefore, it is difficult to realize large-scale industrial production. Then OC gave up the production of S-2 glass fiber and assigned the patent to AGY company which has been devoted to the small-scale production of S glass fiber and its improved products.

Thereafter, in order to decrease the melting temperature and forming temperature of the glass to better satisfy the needs of large-scale tank furnace production, large foreign companies successively developed high-performance glasses based on an MgO-CaO-Al₂O₃-SiO₂ system. Typical compositions were R glass developed by Saint-Gobain of France and HiPer-tex glass developed by OC of the US, which were a trade-off for production scale by sacrificing some of the glass properties. However, as these designed solutions were too conservative, especially the content of Al₂O₃ was kept more than 20%, preferably 25%, the production of glass remained highly difficult. Although small-scale tank furnace production was achieved, the production efficiency was low and the cost-performance ratio of the products was not high. Then OC gave up the production of HiPer-tex glass fiber and assigned the patent of HiPer-tex glass fiber to 3B company of Europe. Around 2007, OCV Company was established by combining OC and Saint-Gobain, and the core technologies of R glass fiber were assigned to OCV Company. The ratio of Ca/Mg in the traditional R glass is too low, which will cause problems such as fiberizing difficulty, high risk of crystallization, high surface tension and fining difficulty of molten glass; the forming temperature is up to about 1410°C and the liquidus temperature up to 1330 °C. All these have caused difficulty in attenuating glass fiber and consequently in realizing large-scale industrial production.

In addition, PPG Industries has disclosed another type of R glass fiber. Its mechanical performance is slightly lower than that of the traditional R glass fiber, but the melting and forming performance are significantly superior to those of the traditional R glass. However, this type of R glass has a high risk of devitrification because the ratios of Si/Ca and Ca/Mg are not reasonably designed. Meanwhile, since too much Li₂O is introduced, not only the chemical stability of the glass is influenced, but also its raw material cost gets significantly higher. Therefore it is also not suitable for large-scale industrial production.

The High-strength 2# glass fiber mainly comprises SiO₂, Al₂O₃ and MgO, and certain amounts of Li₂O, B₂O₃, CeO₂ and Fe₂O₃ are also introduced. It also has high strength and high modulus and its forming temperature is only about 1245°C and its liquidus temperature is 1320°C. Both temperatures are much lower than those of S glass fiber. However, since its forming temperature is lower than its liquidus temperature, which is unfavorable for the control of glass fiber attenuation, the forming temperature has to be increased and specially-shaped tips of bushing have to be used to prevent a glass crystallization phenomenon from occurring in the fiber drawing process. This causes difficulty in temperature control and also makes it difficult to realize large-scale industrial production.

In summary, we have found that, various kinds of high-performance glass fibers generally face production problems such as high liquidus temperature, high risk of devitrification, high forming temperature, high surface tension and fining difficulty of molten glass. The liquidus temperature of the mainstream E-glass is generally less than 1200°C, and its forming temperature is lower than 1300°C, while the above-mentioned high-performance glass fibers generally have liquidus temperatures higher than 1300°C and forming temperatures higher than 1350°C, which can easily cause glass crystallization phenomenon, uneven viscosity and poor fining, thereby greatly reducing the production efficiency, product quality and the service life of refractory materials and platinum bushings.

### SUMMARY OF THE INVENTION

The present invention aims to provide a high-performance glass fiber composition that can solve the aforesaid problems.

According to one aspect of the present invention, the glass fiber composition is provided comprising the following components expressed as percentage by weight:

| | |
|---|---|
| SiO₂ | 58-62% |
| Al₂O₃ | 14-18% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |

wherein , the weight percentage ratio C1=CaO/MgO is greater than 2 and less than or equal to 2.6, and the range of the weight percentage ratio C2=SiO₂/CaO is 3.3-4.3.

Wherein , the content of F₂ expressed as weight percentage is greater than or equal to 0.01% and less than 0.3%.

Wherein , the content of Li₂O expressed as weight percentage is greater than or equal to 0.01% and less than 0.1%.

According to another aspect of this invention, a glass fiber produced with said glass fiber composition is provided.

According to yet another aspect of this invention, a composite material incorporating said glass fiber is provided.

By reasonably designing the ranges of contents of SiO₂, CaO, MgO, Li₂O and F₂ respectively, strictly controlling the ranges of the ratios of CaO/MgO and SiO₂/CaO, making full use of the ternary mixed alkali effect of K₂O, Na₂O and Li₂O, and selectively introducing a small amount of B₂O₃, the technical solutions of the present invention can not only ensure that the glass fiber made therefrom has high mechanical properties, but also solve the problems in the production of high-performance glass fiber, such as high liquidus temperature, high crystallization rate, high forming temperature, cooling difficulty, high surface tension and fining difficulty. The composition can significantly reduce forming temperature, liquidus temperature and surface tension of molten glass, and reduce the fiberizing difficulty, devitrification degree and the bubble amount under the same conditions. Meanwhile, the glass fiber made therefrom possesses favorable mechanical strength. Additionally, said glass fiber would possess exceptional heat resistance property when a high content of TiO₂ is introduced.

Specifically, the glass fiber composition according to the present invention comprises the following components expressed as percentage by weight:

| | |
|---|---|
| SiO₂ | 58-62% |
| Al₂O₃ | 14-18% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |

wherein, the weight percentage ratio C1=CaO/MgO is greater than 2 and less than or equal to 2.6, and the range of the weight percentage ratio C2=SiO₂/CaO is 3.3-4.3.

The effect and content of each component in said glass fiber composition is described as follows:
SiO₂ is a main oxide forming the glass network and has the effect of stabilizing all the components. In the glass fiber composition of the present invention, the restricted content range of SiO₂ is 58-62% by weight. SiO₂ content being too low will affect the mechanical properties of the glass; SiO₂ content being too high will cause the glass viscosity to be excessively high thereby resulting in melting and fining issues. Preferably, the SiO₂ content range can be 58.5-61% by weight. More preferably, the SiO₂ content range can be 58.5-60.4% by weight.

Al₂O₃ is another oxide forming the glass network. When combined with SiO₂, it can have a substantive effect on the mechanical properties of the glass and a significant effect on preventing glass phase separation and on water resistance. The restricted content range of Al₂O₃ in the glass fiber composition of this invention is 14-18% by weight. Al₂O₃ content being too low will be unable to obtain high mechanical properties; Al₂O₃ content being too high will cause the glass viscosity to be excessively high thereby resulting in melting and fining issues. Preferably, the Al₂O₃ content can be 14.5-17% by weight. More preferably, the Al₂O₃ content can be 14.5-16.5% by weight.

CaO is an important glass network modifier and has a particular effect in reducing glass viscosity at high temperature, but the CaO content being too high will cause higher crystallization tendency of glass, thereby resulting in the crystallization of anorthite (CaAl₂Si₂O₈) and wollastonite (CaSiO₃) from the glass melt. MgO has the similar effect, and the Mg²⁺ has higher field strength and plays a significant role in increasing the modulus of glass. MgO content being too high will increase the tendency and rate of the glass crystallization, thus causing the risk of diopside (CaMgSi₂O₆) crystallization. By reasonably designing the content ranges of CaO, MgO, SiO₂ and the ratios therebetween, the present invention succeeds in introducing a competitive growth in crystals of anorthite (CaAl₂Si₂O₈), diopside (CaMgSi₂O₆) and wollastonite(CaSiO₃) so as to retard the growth of these crystals, thus reducing the risk of devitrification. In the glass fiber composition of this invention, the restricted range of the total content of CaO and MgO is 20-24.5% by weight, wherein, the weight percentage ratio C1=CaO/MgO is greater than 2 and less than or equal to 2.6, and the range of the weight percentage ratio C2=SiO₂/CaO is 3.3-4.3. The crystallization of glass could be controlled by making full use of the competition of Mg²⁺, Ca²⁺ and Si⁴⁺ in grabbing the anion groups in the glass, thereby reducing the liquidus temperature and the degree of devitrification. Obviously, the weight percent ratio of CaO/MgO being too low will cause too much content of Mg²⁺, and aggravate the crystallization of diopside; the weight percent ratio of CaO/MgO being too high will cause too much content of Ca²⁺, and aggravate the crystallization of anorthite; the weight percent ratio of SiO₂/CaO being too high will cause higher viscosity; the weight percent ratio of SiO₂/CaO being too low will aggravate the crystallization of wollastonite. Preferably, the range of the weight percentage ratio C1=CaO/MgO is greater than 2 and less than or equal to 2.4, and the range of the weight percentage ratio C2=SiO₂/CaO is 3.4-4.2. More preferably, the range of the weight percentage ratio C2=SiO₂/CaO is 3.5-4.0.

Both K₂O and Na₂O are good fluxing agents that can reduce glass viscosity and improve crystallization properties of the glass. But the added amounts of them should not be too high so as not to reduce the glass strength. In the glass fiber composition of this invention, the restricted range of the total content of Na₂O and K₂O is less than 2% by weight.

TiO₂ can not only reduce the glass viscosity at high temperature, but also has a certain fluxing effect. Meanwhile, high content of TiO₂ greatly helps to improve the heat resistance of the glass. Therefore in the glass fiber composition of this invention, the restricted range of the content of TiO₂ is less than 3.5% by weight. Furthermore, the inventors have found that, the glass would possess exceptional heat resistance when the range of the content of TiO₂ is set to be greater than 2% and less than 3.5% by weight.

The introduction of Fe₂O₃ facilitates the melting of glass and can also improve the crystallization properties of glass. However, since ferric ions and ferrous ions have coloring effects, the introduced amount should be limited. Therefore, in the glass fiber composition of the present invention, the restricted range of the content of Fe₂O₃ is less than 1% by weight.

Li₂O can not only reduce the glass viscosity dramatically to improve melting performance, but also obviously help to improve mechanical properties, compared with Na₂O and K₂O. In addition, a small amount of Li₂O can provide considerable free oxygen, thereby promoting more aluminum ions to form tetrahedral coordination that would help strengthen the glass network and further reduce crystallization tendency of glass. But the added amount of Li₂O should not be too high, as the content of Li⁺ being too high will have a significant effect in disrupting the glass network, affect the stability of glass structure, and thus increase the crystallization tendency of glass. Therefore, in the glass fiber composition of the present invention, the restricted range of the content of Li₂O is 0.01-0.5% by weight. The inventors have found that, the technical effects remain excellent even when the content of Li₂O is kept relatively low, such as greater than or equal to 0.01% and less than 0.1% by weight.

Fluorine (F₂) could be added in small amounts in the glass fiber composition of the present invention. A great amount of experiments and researches show that a small amount of fluorine offers a significant improvement in fluxing performance and reduction of forming temperature and liquidus temperature, while causing little difficulty in waste gas treatment. For example, the weight percent of F₂ being 0.2% can reduce the forming temperature and liquidus temperature by 4-6°C, which is favorable to the fiber attenuation of high performance glass. Therefore, in the glass fiber composition of the present invention, the restricted range of the content of Li₂O is less than 1% by weight. Generally, the content range of F₂ is restricted to be greater than or equal to 0.01% and less than 0.3%, considering that a relatively low content of F₂ can still produce a desired effect.

Additionally, a small amount of B₂O₃ is selectively introduced, which has fluxing effect and can reduce the glass viscosity and devitrification risk. Unexpectedly, the inventors have found that B₂O₃ can further improve strength, modulus and other physical properties of glass when it coexists with Li₂O in the glass composition of the present invention. This is perhaps because, in the inventors' view, the small amount of B₂O₃ have all actively entered the glass structure, which is favorable in optimizing the glass properties. Therefore, in the glass fiber composition of the present invention, the range of the content of B₂O₃ is greater than 0% and less than 0.1% by weight.

In addition to aforementioned components, small amount of impurities may be present in the glass composition according to the present invention, and the total weight percentage of the impurities is less than or equal to 1%.

In the glass fiber composition of the present invention, the beneficial effects produced by the aforementioned selected ranges of the components will be explained through the specific experimental data provided below.

The following are examples of preferred content ranges of the components comprised in the glass fiber composition according to the present invention.

### Preferred example 1

The glass fiber composition according to the present invention comprises the following components expressed as percentage by weight:

| | |
|---|---|
| SiO₂ | 58.5-61 % |
| Al₂O₃ | 14.5-17% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ greater than 0% and less than 0.1% | |

wherein, the range of the weight percentage ratio C1 = CaO/MgO is greater than 2 and less than or equal to 2.4; and the range of the weight percentage ratio C2 = SiO₂/CaO is 3.4-4.2.

### Preferred example 2

The glass fiber composition according to the present invention comprises the following components expressed as percentage by weight:

| | |
|---|---|
| SiO₂ | 58.5-60.4% |
| Al₂O₃ | 14.5-16.5% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |

wherein, the range of the weight percentage ratio C1 = CaO/MgO is greater than 2 and less than or equal to 2.4; and the range of the weight percentage ratio C2 = SiO₂/CaO is 3.5-4.0.

### Preferred example 3

The glass fiber composition according to the present invention comprises the following components expressed as percentage by weight:

| | |
|---|---|
| SiO₂ | 58-62% |
| Al₂O₃ | 14-18% |
| CaO+MgO | 20-24.5% |
| CaO | greater than 14% |
| Li₂O | 0.01-0.5% |
| Na₂O+K₂O | less than 2% |
| TiO₂ | greater than 2% and less than 3.5% |
| Fe₂O₃ | less than 1% |
| F₂ | less than 1% |
| B₂O₃ greater than 0% and less than 0.1% | |

wherein, the range of the weight percentage ratio C1= CaO/MgO is greater than 2 and less than or equal to 2.6; and the range of the weight percentage ratio C2 = SiO₂/CaO is 3.3-4.3.

The present invention provides a high performance glass fiber composition, glass fiber and composite material therefrom. The composition can not only ensure that the glass fiber made therefrom has high mechanical properties, but also solve the problems in the production of high-performance glass fiber, such as high liquidus temperature, high crystallization rate, high forming temperature, cooling difficulty, high surface tension and fining difficulty. The composition can significantly reduce forming temperature, liquidus temperature and surface tension of molten glass, and reduce the fiberizing difficulty, devitrification degree and the bubble amount under the same conditions. Meanwhile, the glass fiber made therefrom possesses favorable mechanical strength.

### DESCRIPTION OF PREFERRED EMBODIMENTS

In order to better clarify the purposes, technical solutions and advantages of the examples of the present invention, the technical solutions in the examples of the present invention are clearly and completely described below combined with the drawings in the examples. Obviously, the examples described herein are just part of the examples of the present invention and are not all the examples. All other exemplary embodiments obtained by one skilled in the art on the basis of the examples in the present invention without performing creative work shall all fall into the scope of protection of the present invention. What needs to be made clear is that, as long as there is no conflict, the examples and the features of examples in the present application can be arbitrarily combined with each other.

The basic concept of the present invention is that, the glass fiber composition comprises the following components expressed as percentage by weight: SiO₂ 58-62%, Al₂O₃ 14-18%, CaO+MgO 20-24.5%, CaO greater than 14%, Li₂O 0.01-0.4%, Na₂O+K₂O less than 2%, TiO₂ less than 3.5%, Fe₂O₃ less than 1%, F₂ less than 1%, wherein, the range of the weight percentage ratio C1 = CaO/MgO is greater than 2 and less than or equal to 2.6, and the range of the weight percentage ratio C2 = SiO₂/CaO is 3.3-4.3. In addition, the glass fiber composition comprises a small amount of B₂O₃, and the content of B₂O₃ expressed as weight percentage is greater than 0% and less than 0.1%. The glass fiber composition in the present invention can not only ensure that the glass fiber made therefrom has high mechanical properties, but also solve the problems in the production of high-performance glass fiber, such as high liquidus temperature, high crystallization rate, high forming temperature, cooling difficulty, high surface tension, fining difficulty and difficulty in large-scale industrial production. The composition can significantly reduce forming temperature, liquidus temperature, and surface tension of molten glass, and reduce the fiberizing difficulty, devitrification degree and the bubble amount under the same conditions. Meanwhile, the glass fiber made therefrom possesses a favorable mechanical strength. Additionally, said glass fiber would possess exceptional heat resistance property when a high content of TiO₂ is introduced.

In accordance with the specific embodiments mentioned, the specific content values of SiO₂, Al₂O₃, CaO, MgO, Na₂O, K₂O, Fe₂O₃, Li₂O, TiO₂ and B₂O₃ in the glass fiber composition of the present invention are selected to be used in the examples, which are compared with the properties of traditional E and R glasses and improved R glass in terms of the following six property parameters:
(1) Forming temperature, the temperature at which the glass melt has a viscosity of 10³ poise.
(2) Liquidus temperature, the temperature at which the crystal nucleuses begin to form when the glass melt cools off, i.e., the upper limit temperature for glass crystallization.
(3) ΔT value, which is the temperature differential between the forming temperature and the liquidus temperature and indicates the temperature range at which fiber drawing can be performed.
(4) Crystallization peak temperature, the temperature of the strongest crystallization peak in the DTA(Differential Thermal Analysis) test. Generally, the higher the temperature is, the more energy that the crystal nucleuses to be growing up needs, and the smaller crystallization tendency of glass is.
(5) Filament strength, the tensile strength that a filament of glass fiber strand can withstand.
(6) Softening point temperature, which is a measurement of the ability of glass to resist high temperature deformation.

The aforementioned six parameters and the methods of measuring them are well-known to one skilled in the art. Therefore, the aforementioned parameters can be effectively used to explain the properties of the glass fiber composition of the present invention.

The specific procedures for the experiments are as follows: Each component can be acquired from the appropriate raw materials; the raw materials are mixed in the appropriate proportions so that each component reaches the final expected weight percentage; the mixed batch is melted and clarified; then the molten glass is drawn out through the tips of the bushings, thereby forming the glass fiber; the glass fiber is attenuated onto the rotary collet of a winder to form cakes or packages. Of course, conventional methods can be used to deeply process these glass fibers to meet the expected requirements.

The exemplary embodiments of the glass fiber composition according to the present invention are given below.

### Example 1 (not according to the present invention)

| | |
|---|---|
| SiO₂ | 58% |
| Al₂O₃ | 18% |
| CaO | 14.1% |
| MgO | 6.9% |
| B₂O₃ | - |
| Li₂O | 0.01% |
| Na₂O | 0.51% |
| K₂O | 0.28% |
| Fe₂O₃ | 0.69% |
| TiO₂ | 0.61% |
| F₂ | 0.90% |

wherein, the weight percentage ratio C1 = CaO/MgO is 2.04; and the weight percentage ratio C2 = SiO₂/CaO is 4.11.

In Example 1, the measured values of the six parameters are respectively:

| | |
|---|---|
| Forming temperature | 1271°C |
| Liquidus temperature | 1187°C |
| ΔT | 84°C |
| Crystallization peak temperature | 1042°C |
| Filament strength | 4115MPa |
| Softening point temperature | 915°C |

### Example 2 (not according to the present invention)

| | |
|---|---|
| SiO₂ | 62% |
| Al₂O₃ | 14% |
| CaO | 15.6% |
| MgO | 6.0% |
| B₂O₃ | - |
| Li₂O | 0.05% |
| Na₂O | 0.01% |
| K₂O | 1.88% |
| Fe₂O₃ | 0.40% |
| TiO₂ | 0.04% |
| F₂ | 0.02% |

wherein, the weight percentage ratio C1 = CaO/MgO is 2.60; and the weight percentage ratio C2 = SiO₂/CaO is 3.97.

In Example 2, the measured values of the six parameters are respectively:

| | |
|---|---|
| Forming temperature | 1277°C |
| Liquidus temperature | 1195°C |
| ΔT | 82°C |
| Crystallization peak temperature | 1034°C |
| Filament strength | 4195MPa |
| Softening point temperature | 920°C |

### Example 3 (not according to the present invention)

| | |
|---|---|
| SiO₂ | 59.4% |
| Al₂O₃ | 14.5% |
| CaO | 16.5% |
| MgO | 6.875% |
| B₂O₃ | - |
| Li₂O | 0.03% |
| Na₂O | 0.12% |
| K₂O | 1.175% |
| TiO₂ | 1.29% |
| Fe₂O₃ | 0.05% |
| F₂ | 0.06% |

wherein, the weight percentage ratio C1 = CaO/MgO is 2.4; and the weight percentage ratio C2 = SiO₂/CaO is 3.60.

In Example 3, the measured values of the six parameters are respectively:

| | |
|---|---|
| Forming temperature | 1265°C |
| Liquidus temperature | 1187°C |
| ΔT | 78°C |
| Crystallization peak temperature | 1043°C |
| Filament strength | 4149MPa |
| Softening point temperature | 916°C |

### Example 4 (not according to the present invention)

| | |
|---|---|
| SiO₂ | 61% |
| Al₂O₃ | 17% |
| CaO | 14.2% |
| MgO | 5.8% |
| | - |
| Li₂O | 0.01% |
| Na₂O | 0.21% |
| K₂O | 0.15% |
| Fe₂O₃ | 0.99% |
| TiO₂ | 0.32% |
| F₂ | 0.32% |

wherein, the weight percentage ratio C1 = CaO/MgO is 2.45; and the weight percentage ratio C2 = SiO₂/CaO is 4.30.

In Example 4, the measured values of the six parameters are respectively:

| | |
|---|---|
| Forming temperature | 1278°C |
| Liquidus temperature | 1196°C |
| ΔT | 82°C |
| Crystallization peak temperature | 1030°C |
| Filament strength | 4216MPa |
| Softening point temperature | 920°C |

### Example 5 (not according to the present invention)

| | |
|---|---|
| SiO₂ | 58.5% |
| Al₂O₃ | 16.5% |
| CaO | 14.5% |
| MgO | 7% |
| B₂O₃ | - |
| Li₂O | 0.5% |
| Na₂O | 0.5% |
| K₂O | 0.15% |
| Fe₂O₃ | 0.35% |
| TiO₂ | 1.8% |
| F₂ | 0.2% |

wherein, the weight percentage ratio C1 = CaO/MgO is 2.07; and the weight percentage ratio C2 = SiO₂/CaO is 4.03.

In Example 5, the measured values of the six parameters are respectively:

| | |
|---|---|
| Forming temperature | 1264°C |
| Liquidus temperature | 1190°C |
| ΔT | 74°C |
| Crystallization peak temperature | 1040°C |
| Filament strength | 4147MPa |
| Softening point temperature | 922°C |

### Example 6 (not according to the present invention)

| | |
|---|---|
| SiO₂ | 58.625% |
| Al₂O₃ | 14.375% |
| CaO | 16.75% |
| MgO | 7.75% |
| | - |
| Li₂O | 0.15% |
| Na₂O | 0.1% |
| K₂O | 0.02% |
| Fe₂O₃ | 0.02% |
| TiO₂ | 2.06% |
| F₂ | 0.15% |

wherein, the weight percentage ratio C1 = CaO/MgO is 2.16; and the weight percentage ratio C2 = SiO₂/CaO is 3.50.

In Example 6, the measured values of the six parameters are respectively:

| | |
|---|---|
| Forming temperature | 1269°C |
| Liquidus temperature | 1190°C |
| ΔT | 79°C |
| Crystallization peak temperature | 1040°C |
| Filament strength | 4124MPa |
| Softening point temperature | 925°C |

### Example 7 (not according to the present invention)

| | |
|---|---|
| SiO₂ | 60.4% |
| Al₂O₃ | 15% |
| CaO | 15.1% |
| MgO | 6.25% |
| | - |
| Li₂O | 0.01 % |
| Na₂O | 0.5% |
| K₂O | 0.8% |
| Fe₂O₃ | 0.2% |
| TiO₂ | 1.24% |
| F₂ | 0.5% |

wherein, the weight percentage ratio C1 = CaO/MgO is 2.42; and the weight percentage ratio C2 = SiO₂/CaO is 4.00.

In Example 7, the measured values of the six parameters are respectively:

| | |
|---|---|
| Forming temperature | 1273°C |
| Liquidus temperature | 1196°C |
| ΔT | 77°C |
| Crystallization peak temperature | 1030°C |
| Filament strength | 4130MPa |
| Softening point temperature | 915°C |

### Example 8

| | |
|---|---|
| SiO₂ | 58.48% |
| Al₂O₃ | 14% |
| CaO | 17.2% |
| MgO | 6.2% |
| B₂O₃ | 0.08% |
| Li₂O | 0.5% |
| Na₂O | 0.5% |
| K₂O | 0.25% |
| Fe₂O₃ | 0.5% |
| TiO₂ | 1.79% |
| F₂ | 0.5% |

wherein, the weight percentage ratio C1 = CaO/MgO is 2.29; and the weight percentage ratio C2 = SiO₂/CaO is 3.40.

In Example 8, the measured values of the six parameters are respectively:

| | |
|---|---|
| Forming temperature | 1260°C |
| Liquidus temperature | 1182°C |
| ΔT | 78°C |
| Crystallization peak temperature | 1044°C |
| Filament strength | 4110MPa |
| Softening point temperature | 914°C |

### Example 9 (not according to the present invention)

| | |
|---|---|
| SiO₂ | 59.5% |
| Al₂O₃ | 14% |
| CaO | 17.5% |
| MgO | 7% |
| Li₂O | 0.08% |
| Na₂O | 0.41% |
| K₂O | 0.51% |
| Fe₂O₃ | 0.5% |
| TiO₂ | 0.3% |
| F₂ | 0.2% |

wherein, the weight percentage ratio C1 = CaO/MgO is 2.50; and the weight percentage ratio C2 = SiO₂/CaO is 3.40.

In Example 9, the measured values of the six parameters are respectively:

| | |
|---|---|
| Forming temperature | 1272°C |
| Liquidus temperature | 1194°C |
| ΔT | 78°C |
| Crystallization peak temperature | 1032°C |
| Filament strength | 4132MPa |
| Softening point temperature | 912°C |

### Example 10

| | |
|---|---|
| SiO₂ | 60.9% |
| Al₂O₃ | 15.2% |
| CaO | 14.5% |
| MgO | 7.1% |
| B₂O₃ | 0.01% |
| Li₂O | 0.14% |
| Na₂O | 0.41% |
| K₂O | 0.33% |
| Fe₂O₃ | 0.41% |
| TiO₂ | 1.00% |
| F₂ | - |

wherein, the weight percentage ratio C1 = CaO/MgO is 2.05; and the weight percentage ratio C2 = SiO₂/CaO is 4.20.

In Example 10, the measured values of the six parameters are respectively:

| | |
|---|---|
| Forming temperature | 1274°C |
| Liquidus temperature | 1194°C |
| ΔT | 80°C |
| Crystallization peak temperature | 1034°C |
| Filament strength | 4137MPa |
| Softening point temperature | 923°C |

### Example 11 (not according to the present invention)

| | |
|---|---|
| SiO₂ | 60.1% |
| Al₂O₃ | 15.2% |
| CaO | 15.1% |
| MgO | 7.5% |
| B₂O₃ | - |
| Li₂O | 0.50% |
| Na₂O | 0.44% |
| K₂O | 0.28% |
| Fe₂O₃ | 0.42% |
| TiO₂ | 0.28% |
| F₂ | - |

wherein, the weight percentage ratio C1 = CaO/MgO is 2.02; and the weight percentage ratio C2 = SiO₂/CaO is 3.99.

In Example 11, the measured values of the six parameters are respectively:

| | |
|---|---|
| Forming temperature | 1274°C |
| Liquidus temperature | 1193°C |
| ΔT | 81°C |
| Crystallization peak temperature | 1036°C |
| Filament strength | 4156MPa |
| Softening point temperature | 920°C |

Comparisons of the property parameters of the aforementioned examples and other examples of the glass fiber composition of the present invention with those of the traditional E glass, traditional R glass and improved R glass are further made below by way of tables, wherein the component contents of the glass fiber composition are expressed as weight percentage. What needs to be made clear is that the total amount of the components in the examples is slightly less than 100%, and it should be understood that the remaining amount is trace impurities or a small amount of components which cannot be analyzed. In tables 1 and 2, compositions A2, A3, and A9 are inventive examples, whereas compositions A1, A4-A8, A10, and A11 are not according to the invention.

**Table 1**

| | | A1 | A2 | A3 | A4 | A5 | A6 | A7 |
|---|---|---|---|---|---|---|---|---|
| Component | SiO₂ | 59.4 | 59.5 | 60.4 | 60.0 | 60.1 | 59.2 | 59.7 |
| | Al₂O₃ | 15.2 | 15.4 | 15.5 | 15.3 | 16.5 | 15.0 | 15.5 |
| | CaO | 16.6 | 16.1 | 14.8 | 14.05 | 14.1 | 16.1 | 15.5 |
| | MgO | 6.8 | 7.0 | 7.0 | 6.7 | 7.0 | 8.0 | 7.2 |
| | B₂O₃ | - | 0.05 | 0.05 | - | - | - | - |
| | Na₂O | 0.51 | 0.51 | 0.51 | 0.61 | 0.48 | 0.43 | 0.51 |
| | K₂O | 0.28 | 0.28 | 0.28 | 0.21 | 0.35 | 0.31 | 0.28 |
| | Li₂O | 0.09 | 0.20 | 0.40 | 0.15 | 0.41 | 0.04 | 0.25 |
| | Fe₂O₃ | 0.41 | 0.41 | 0.41 | 0.41 | 0.41 | 0.42 | 0.41 |
| | TiO₂ | 0.31 | 0.35 | 0.30 | 2.37 | 0.45 | 0.25 | 0.35 |
| | F₂ | 0.20 | - | 0.15 | - | - | 0.05 | 0.10 |
| Ratio | C1 | 2.45 | 2.30 | 2.12 | 2.10 | 2.02 | 2.02 | 2.16 |
| | C2 | 3.58 | 3.70 | 4.09 | 4.28 | 4.27 | 3.68 | 3.86 |
| Parameter | Forming temperature/°C | 1274 | 1276 | 1275 | 1274 | 1277 | 1271 | 1273 |
| | Liquidus temperature/°C | 1195 | 1194 | 1194 | 1193 | 1195 | 1192 | 1194 |
| | ΔT/°C | 79 | 82 | 81 | 81 | 82 | 79 | 79 |
| | Crystallization peak temperature/°C | 1031 | 1034 | 1033 | 1035 | 1032 | 1039 | 1034 |
| | Filament strength/MPa | 4145 | 4149 | 4142 | 4148 | 4153 | 4146 | 4135 |
| | Softening point temperature /°C | 919 | 918 | 921 | 930 | 920 | 917 | 918 |

**Table 2**

| | | A8 | A9 | A10 | A11 | Traditional E glass | Traditional R glass | Improved R glass |
|---|---|---|---|---|---|---|---|---|
| Component | SiO₂ | 59.0 | 60.5 | 59.6 | 60.1 | 54.16 | 60 | 60.75 |
| | Al₂O₃ | 16.0 | 15.2 | 15.7 | 15.2 | 14.32 | 25 | 15.80 |
| | CaO | 15.4 | 14.5 | 15.5 | 15.1 | 22.12 | 9 | 13.90 |
| | MgO | 7.5 | 7.1 | 7.2 | 7.5 | 0.41 | 6 | 7.90 |
| | B₂O₃ | - | 0.01 | - | - | 7.6 | - | - |
| | Na₂O | 0.50 | 0.45 | 0.56 | 0.44 | 0.45 | trace amount | 0.73 |
| | K₂O | 0.26 | 0.33 | 0.25 | 0.28 | 0.25 | trace amount | |
| | Li₂O | 0.30 | 0.14 | 0.19 | 0.50 | 0 | 0 | 0.48 |
| | Fe₂O₃ | 0.40 | 0.41 | 0.41 | 0.42 | 0.35 | trace amount | 0.18 |
| | TiO₂ | 0.34 | 1.05 | 0.34 | 0.26 | 0.34 | trace amount | 0.12 |
| | F₂ | 0.10 | - | 0.15 | - | > 0.4 | - | - |
| Ratio | C1 | 2.06 | 2.05 | 2.16 | 2.02 | 53.96 | 1.50 | 1.76 |
| | C2 | 3.84 | 4.18 | 3.85 | 3.99 | 2.45 | 6.67 | 4.38 |
| Parameter | Forming temperature/ °C | 1273 | 1274 | 1275 | 1274 | 1175 | 1430 | 1278 |
| | Liquidus temperature/ °C | 1192 | 1194 | 1195 | 1193 | 1075 | 1350 | 1210 |
| | ΔT/°C | 81 | 80 | 80 | 81 | 100 | 80 | 68 |
| | Crystallization peak temperature/ °C | 1038 | 1034 | 1033 | 1036 | / | 1010 | 1016 |
| | Filament strength/MPa | 4134 | 4137 | 4128 | 4156 | 3265 | 4220 | 4089 |
| | Softening point temperature /°C | 918 | 923 | 919 | 920 | 835 | 923 | 912 |

It can be seen from the values in the above tables that, compared with the traditional R glass and improved R glass, the glass fiber composition of the present invention has the following advantages: (1) The composition has much lower liquidus temperature, which helps to reduce crystallization risk and increase the fiber drawing efficiency. (2) The composition has higher crystallization peak temperature, which means more energy is needed for the crystal nucleuses to grow, that is to say, the composition has lower crystallization risk under the same condition. (3) The composition has lower forming temperature. Meanwhile, the composition has higher filament strength and softening point temperature compared with the improved R glass. It can be seen that, compared with the improved R glass, the glass fiber composition of the present invention makes a breakthrough in crystallization performance, filament strength and heat resistance, and greatly reduces crystallization risk, significantly improves the filament strength and softening point temperature under the same conditions, and the cost-performance ratio of the entire technical solutions is higher, thereby making it more suitable for large-scale tank furnace production.

The glass fiber composition according to the present invention can be used for making glass fibers having the aforementioned excellent properties.

The glass fiber composition according to the present invention can be used in combination with one or more organic and/or inorganic materials for preparing composite materials having excellent performances, such as glass fiber reinforced base materials.

In conclusion, the present invention provides a glass fiber composition, glass fiber and composite material therefrom. The composition can not only ensure that the glass fiber made therefrom has high mechanical properties, but also solve the problems in the production of high-performance glass fiber, such as high liquidus temperature, high crystallization rate, high forming temperature, cooling difficulty, high surface tension and fining difficulty. The composition can significantly reduce forming temperature, liquidus temperature and surface tension of molten glass, and reduce the fiberizing difficulty, devitrification degree and the bubble amount under the same conditions. Meanwhile, the glass fiber made therefrom possesses favorable mechanical strength.

Finally, what should be made clear is that, in this text, the terms "contain", "comprise" or any other variants are intended to mean "nonexclusively include" so that any process, method, article or equipment that contains a series of factors shall include not only such factors, but also include other factors that are not explicitly listed, or also include intrinsic factors of such process, method, object or equipment. Without more limitations, factors defined by the phrase "contain a..." or its variants do not rule out that there are other same factors in the process, method, article or equipment which include said factors.

The above examples are provided only for the purpose of illustrating instead of limiting the technical solutions of the present invention. Although the present invention is described in details by way of aforementioned examples, one skilled in the art shall understand that modifications can also be made to the technical solutions embodied by all the aforementioned examples or equivalent replacement can be made to some of the technical features. However, such modifications or replacements will not cause the resulting technical solutions to substantially deviate from the ranges of the technical solutions respectively embodied by all the examples of the present invention.

### INDUSTRIAL APPLICABILITY OF THE INVENTION

The glass fiber composition of the present invention makes a breakthrough in crystallization properties, filament strength and heat resistance of the glass compared with the improved R glass, and greatly reduces crystallization risk, and significantly improves the filament strength and softening point temperature under the same conditions, and the cost-performance ratio of the entire technical solutions is higher, thereby making it more suitable for large-scale tank furnace production.

## Claims

1. A glass fiber composition, **characterized by**, comprising the following components expressed as percentage by weight:
| | |
|---|---|
| SiO₂ | 58-62% |
| Al₂O₃ | 14-18% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |
wherein, the range of the weight percentage ratio C1= CaO/MgO is greater than 2 and less than or equal to 2.6, and the range of the weight percentage ratio C2= SiO₂/CaO is 3.3-4.3.

2. The glass fiber composition of claim 1, **characterized by**, the content of F₂ expressed as weight percentage is greater than or equal to 0.01% and less than 0.3%.

3. The glass fiber composition of claim 1, **characterized by**, the content of Li₂O expressed as weight percentage is greater than or equal to 0.01% and less than 0.1%.

4. The glass fiber composition of claim 1, **characterized by**, the range of the weight percentage ratio C2= SiO₂/CaO is 3.4-4.2.

5. The glass fiber composition of claim 1, **characterized by**, comprising the following components expressed as percentage by weight:
| | |
|---|---|
| SiO₂ | 58.5-61% |
| Al₂O₃ | 14.5-17% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |
wherein ,the range of the weight percentage ratio C1= CaO/MgO is greater than 2 and less than or equal to 2.4, and the range of the weight percentage ratio C2= SiO₂/CaO is 3.4-4.2.

6. The glass fiber composition of claim 1, **characterized by**, comprising the following components expressed as percentage by weight:
| | |
|---|---|
| SiO₂ | 58.5-60.4% |
| Al₂O₃ | 14.5-16.5% |
| CaO+MgO | 20-24.5% |
| CaO | greater than 14% |
| Li₂O | 0.01-0.5% |
| Na₂O+K₂O | less than 2% |
| TiO₂ | less than 3.5% |
| Fe₂O₃ | less than 1% |
| F₂ | less than 1% |
| B₂O₃ | greater than 0% and less than 0.1% |
wherein ,the range of the weight percentage ratio C1= CaO/MgO is greater than 2 and less than or equal to 2.4, and the range of the weight percentage ratio C2= SiO₂/CaO is 3.5-4.0.

7. The glass fiber composition of claim 1 or 6, **characterized by**, the content of TiO₂ expressed as weight percentage is greater than 2% and less than 3.5%.

8. A glass fiber, **characterized by**, being produced from the glass fiber composition described in any of claims 1 to 7.

9. A composite material, **characterized by**, incorporating the glass fiber described in claim 8.

## Patentansprüche

1. Glasfaserzusammensetzung, **dadurch gekennzeichnet, dass** sie die folgenden Komponenten, ausgedrückt als Gewichtsprozent, umfasst:
| | |
|---|---|
| SiO₂ | 58-62% |
| Al₂O₃ | 14-18% |
| CaO+MgO | 20-24,5% |
| CaO | mehr als 14% |
| Li₂O | 0,01-0,5% |
| Na₂O+K₂O | weniger als 2% |
| TiO₂ | weniger als 3,5% |
| Fe₂O₃ | weniger als 1% |
| F₂ | weniger als 1% |
| B₂O₃ | mehr als 0 % und weniger als 0,1%, |
wobei der Bereich des Gewichtsprozentverhältnisses C1= CaO/MgO größer als 2 und kleiner als oder gleich 2,6 ist, und der Bereich des Gewichtsprozentverhältnisses C2= SiO₂/CaO 3,3-4,3 ist.

2. Glasfaserzusammensetzung nach Anspruch 1, **dadurch gekennzeichnet, dass** der Gehalt an F₂, ausgedrückt als Gewichtsprozent, größer als oder gleich 0,01 % und kleiner als 0,3 % ist.

3. Glasfaserzusammensetzung nach Anspruch 1, **dadurch gekennzeichnet, dass** der Gehalt an Li₂O, ausgedrückt als Gewichtsprozent, größer als oder gleich 0,01 % und kleiner als 0,1% ist.

4. Glasfaserzusammensetzung nach Anspruch 1, **dadurch gekennzeichnet, dass** der Bereich des Gewichtsprozentverhältnisses C2= SiO₂/CaO 3,4-4,2 beträgt.

5. Glasfaserzusammensetzung nach Anspruch 1, **dadurch gekennzeichnet, dass** sie die folgenden Komponenten, ausgedrückt als Gewichtsprozent, umfasst:
| | |
|---|---|
| SiO₂ | 58,5-61% |
| Al₂O₃ | 14,5-17% |
| CaO+MgO | 20-24,5% |
| CaO | mehr als 14% |
| Li₂O | 0,01-0,5% |
| Na₂O+K₂O | weniger als 2% |
| TiO₂ | weniger als 3,5% |
| Fe₂O₃ | weniger als 1% |
| F₂ | weniger als 1% |
| B₂O₃ | mehr als 0 % und weniger als 0,1% |
wobei der Bereich des Gewichtsprozentverhältnisses C1= CaO/MgO größer als 2 und kleiner als oder gleich 2,4 ist, und der Bereich des Gewichtsprozentverhältnisses C2= SiO₂/CaO 3,4-4,2 ist.

6. Glasfaserzusammensetzung nach Anspruch 1, **dadurch gekennzeichnet, dass** sie die folgenden Komponenten, ausgedrückt als Gewichtsprozent, umfasst:
| | |
|---|---|
| SiO₂ | 58,5-60,4% |
| Al₂O₃ | 14,5-16,5% |
| CaO+MgO | 20-24,5% |
| CaO | mehr als 14% |
| Li₂O | 0,01-0,5% |
| Na₂O+K₂O | weniger als 2% |
| TiO₂ | weniger als 3,5% |
| Fe₂O₃ | weniger als 1% |
| F₂ | weniger als 1% |
| B₂O₃ | mehr als 0 % und weniger als 0,1% |
wobei der Bereich des Gewichtsprozentverhältnisses C1= CaO/MgO größer als 2 und kleiner als oder gleich 2,4 ist und der Bereich des Gewichtsprozentverhältnisses C2= SiO₂/CaO 3,5-4,0 ist.

7. Glasfaserzusammensetzung nach Anspruch 1 oder 6, **dadurch gekennzeichnet, dass** der Gehalt an TiO₂, ausgedrückt als Gewichtsprozent, größer als 2 % und kleiner als 3,5 % ist.

8. Glasfaser, **dadurch gekennzeichnet, dass** sie aus der in einem der Ansprüche 1 bis 7 beschriebenen Glasfaserzusammensetzung hergestellt ist.

9. Verbundwerkstoff, **dadurch gekennzeichnet, dass** er die in Anspruch 8 beschriebene Glasfaser enthält.

## Revendications

1. Composition de fibre de verre, **caractérisée en ce qu'**elle comprend les constituants suivants exprimés sous forme de leur pourcentage en poids :
| | |
|---|---|
| SiO₂ | 58 à 62 % |
| Al₂O₃ | 14 à 18% |
| CaO + MgO | 20 à 24,5 % |
| CaO | supérieur à 14 % |
| Li₂O | 0,01 à 0,5 % |
| Na₂O + K₂O | inférieur à 2 % |
| TiO₂ | inférieur à 3,5 % |
| Fe₂O₃ | inférieur à 1 % |
| F₂ | inférieur à 1 % |
| B₂O₃ | supérieur à 0 % et inférieur à 0,1% |
dans laquelle, la plage du rapport du pourcentage en poids C1 = CaO/MgO est supérieure à 2 et inférieure ou égale à 2,6, et la plage du rapport du pourcentage en poids C2 = SiO₂/CaO est de 3,3 à 4,3.

2. Composition de fibre de verre selon la revendication 1, **caractérisée en ce que** la teneur en F₂, exprimée par le pourcentage en poids, est égale ou supérieure à 0,01 % et inférieure à 0,3 %.

3. Composition de fibre de verre selon la revendication 1, **caractérisée en ce que** la teneur en Li₂O exprimée par le pourcentage en poids est égale ou supérieure à 0,01 % et inférieure à 0,1%.

4. Composition de fibre de verre selon la revendication 1, **caractérisée en ce que** la plage du rapport de pourcentage en poids C2 = SiO₂/CaO est de 3,4 à 4,2.

5. Composition de fibre de verre selon la revendication 1, **caractérisée en ce qu'**elle comprend les constituants suivants exprimés sous forme du pourcentage en poids :
| | |
|---|---|
| SiO₂ | 58,5 à 61 % |
| Al₂O₃ | 14,5 à 17 % |
| CaO + MgO | 20 à 24,5 % |
| CaO | supérieur à 14 % |
| Li₂O | 0,01 à 0,5 % |
| Na₂O + K₂O | inférieur à 2 % |
| TiO₂ | inférieur à 3,5 % |
| Fe₂O₃ | inférieur à 1 % |
| F₂ | inférieur à 1 % |
| B₂O₃ | supérieur à 0 % et inférieur à 0,1% |
dans laquelle la plage du rapport de pourcentage en poids C1 = CaO/MgO est supérieur à 2 et inférieur ou égal à 2,4, et la plage du rapport de pourcentage en poids C2 = SiO₂/CaO est de 3,4 à 4,2.

6. Composition de fibre de verre selon la revendication 1, **caractérisée en ce qu'**elle comprend les constituants suivants exprimés sous forme du pourcentage en poids :
| | |
|---|---|
| SiO₂ | 58,5 à 60,4 % |
| Al₂O₃ | 14,5 à 16,5 % |
| CaO + MgO | 20 à 24,5 % |
| CaO | supérieur à 14 % |
| Li₂O | 0,01 à 0,5 % |
| Na₂O + K₂O | inférieur à 2 % |
| TiO₂ | inférieur à 3,5 % |
| Fe₂O₃ | inférieur à 1 % |
| F₂ | inférieur à 1 % |
| B₂O₃ | supérieur à 0 % et inférieur à 0,1% |
dans laquelle la plage du rapport de pourcentage en poids C1 = CaO/MgO est supérieure à 2 et inférieur ou égal à 2,4, et la plage du rapport de pourcentage en poids C2 = SiO₂/CaO est de 3,5 à 4,0.

7. Composition de fibre de verre selon la revendication 1 ou la revendication 6, **caractérisée par**, la teneur en TiO₂ exprimée par le pourcentage en poids est supérieure à 2 % et inférieure à 3,5 %.

8. Fibre de verre, **caractérisée par**, étant produite à partir de la composition de fibre de verre selon l'une quelconque des revendications 1 à 7.

9. Matériau composite, **caractérisé par** l'incorporation de la fibre de verre selon la revendication 8.
